(19) Europäisches Patentamt
European Patent Office
Office européen des brevets

(11) Veröffentlichungsnummer: **0 323 803**
**A1**

# (12) EUROPÄISCHE PATENTANMELDUNG

(21) Anmeldenummer: **88810891.7**

(51) Int. Cl.4: **C08K 5/34 , C09D 7/12**

(22) Anmeldetag: **22.12.88**

(30) Priorität: **30.12.87 US 139554**
**30.12.87 US 139563**

(43) Veröffentlichungstag der Anmeldung:
**12.07.89 Patentblatt 89/28**

(84) Benannte Vertragsstaaten:
**BE DE ES FR GB IT NL SE**

(71) Anmelder: **CIBA-GEIGY AG**
**Klybeckstrasse 141**
**CH-4002 Basel(CH)**

(72) Erfinder: **Behrens, Rudolf A.**
**P.O. Box 8213**
**New Fairfield Connecticut 06812(US)**
Erfinder: **Mar, Andrew**
**97 Beacon Street**
**Norwalk Connecticut 06851(US)**
Erfinder: **Schirmann, Peter J.**
**89 Eunice Avenue**
**Fairfield Connecticut 06430(US)**

## (54) Stabilisierung von Lacken mit N-formylierten gehinderten Aminen.

(57) N-Formylierte gehinderte Amine sind wirkungsvolle Stabilisatoren für Anstrichstoffe, insbesondere gegen deren Schädigung durch Licht. Sie enthalten eine Gruppe

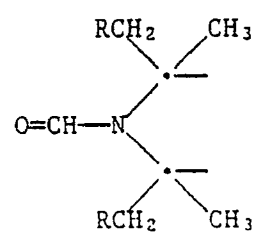

worin R Wasserstoff oder Methyl ist.

EP 0 323 803 A1

## Stabilisierung von Lacken mit N-formylierten gehinderten Aminen

Die Erfindung betrifft gegen Licht stabilisierte Anstrichmittel, die als Stabilisator ein N-formyliertes gehindertes Amin enthalten.

Gehinderte Amine sind bekannt als Lichtschutzmittel für verschiedene organische Substrate, insbesondere für Polymere. Für die Verwendung in sauer katalysierten Einbrennlacken wurden N-substituierte Amine vorgeschlagen (EP-A-6213), insbesondere N-acylierte Amine (EP-A-52073). N-formylierte gehinderte Amine wurden bisher nicht speziell genannt und eine besondere Wirkung derselben war nicht bekannt.

Es wurde nun gefunden, dass N-formylierte gehinderte Amine eine besonders gute Wirkung in Anstrichmitteln aufweisen. Sie schützen gegen die durch Licht, Luft und Feuchtigkeit auftretenden Schäden bei der Bewitterung von Anstrichen, wie z.B. Versprödung, Rissbildung, Glanzverlust, Auskreiden und Vergilben in hervorragender Weise.

Die N-formylierten gehinderten Amine dieser Erfindung enthalten die Gruppe

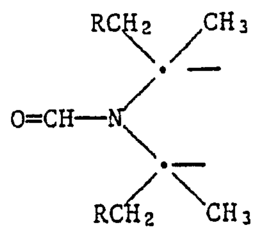

worin R Wasserstoff oder Methyl ist. R ist vorzugsweise Wasserstoff. Diese Gruppe kann Teil einer cyclischen Verbindung sein, wie z.B. Teil eines Pyrrolidin-, Piperidin, oder Piperazinringes, der weitere Substituenten enthalten kann. Von besonderem Interesse sind die Piperidinderivate der folgenden Formeln A bis H

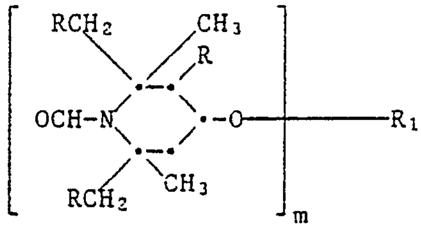

A

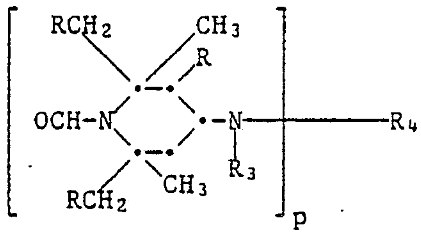

B

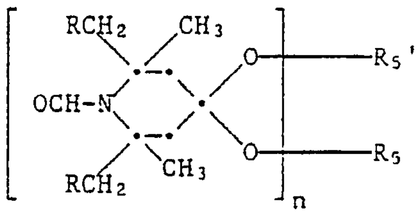

C

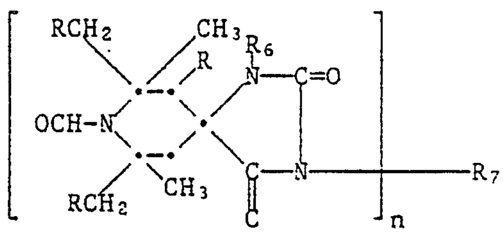

D

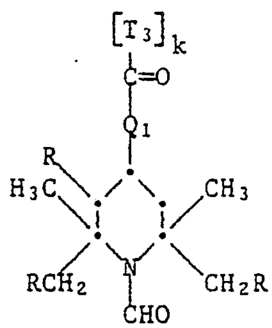

E

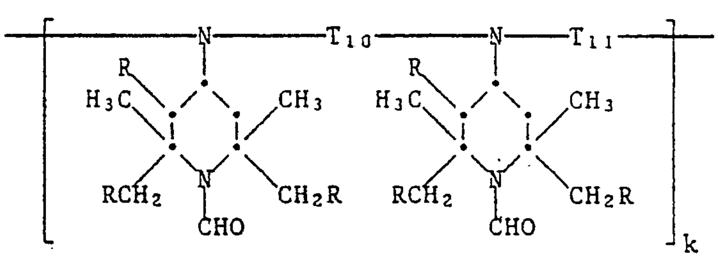

F

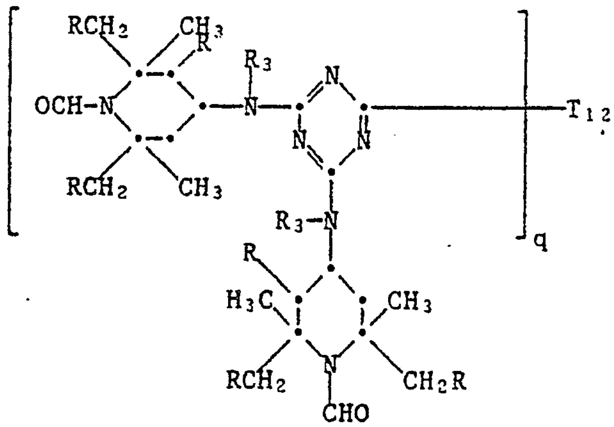

G

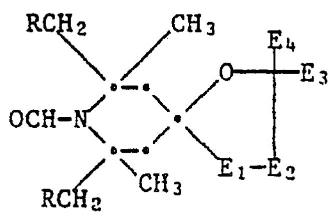

H

worin R Wasserstoff oder Methyl ist,
m 1-4 ist und
wenn m 1 ist, $R_1$ Wasserstoff, $C_1$-$C_{18}$-Alkyl, durch ein oder mehrere Sauerstoffatome unterbrochenes $C_3$-$C_{18}$-Alkyl, $C_2$-$C_{12}$-Alkenyl, $C_6$-$C_{10}$-Aryl, $C_7$-$C_{12}$-Aralkyl, Glycidyl oder einen einwertigen Acylrest bedeutet, der abgeleitet ist von einer aliphatischen, cycloaliphatischen, araliphatischen oder aromatischen Carbonsäure oder Carbaminsäure mit 2-18 C-Atomen, oder $R_1$ einen Rest der Formel I bedeutet,

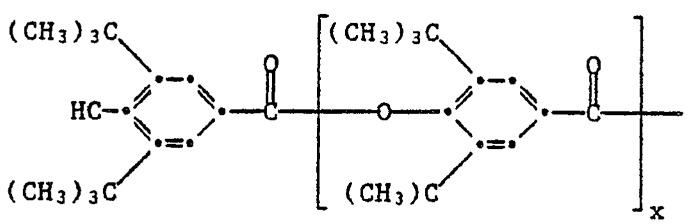

I

worin x 0 oder 1 ist, oder $R_1$ einen Rest der Formel II bedeutet

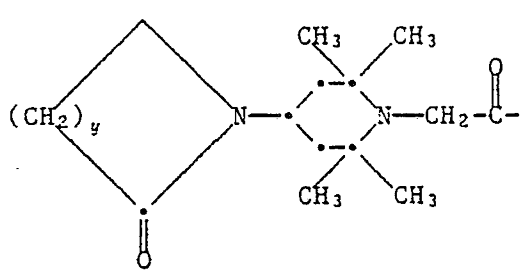

II

worin y 2-4 ist;
und wenn m 2 ist, $R_1$ $C_2$-$C_{12}$-Alkylen, $C_4$-$C_{12}$-Alkenylen, Xylylen oder einen zweiwertigen Acylrest bedeutet, der abgeleitet ist von einer aliphatischen, cycloaliphatischen, araliphatischen oder aromatischen Dicarbonsäure oder Dicarbaminsäure mit 2-12 C-Atomen; und wenn m 3 ist, $R_1$ einen dreiwertigen Arylrest

einer aliphatischen, cycloaliphatischen oder aromatischen Tricarbonsäure mit 4-15 C-Atomen bedeutet; und wenn m 4 ist, $R_1$ einen vierwertigen Acylrest einer aliphatischen oder aromatischen Tetracarbonsäure mit 6-18 C-Atomen bedeutet;
p 1, 2 oder 3 ist,
$R_3$ Wasserstoff, $C_1$-$C_{12}$-Alkyl, $C_5$-$C_7$-Cycloalkyl, $C_7$-$C_9$-Aralkyl, $C_1$-$C_{18}$-Alkanoyl, $C_3$-$C_5$-Alkenoyl oder Benzoyl bedeutet, und wenn p 1 ist, $R_4$ Wasserstoff, $C_1$-$C_{18}$-Alkyl, $C_5$-$C_7$-Cycloalkyl, $C_2$-$C_8$-Alkenyl, $C_6$-$C_{10}$-Aryl, $C_7$-$C_9$-Aralkyl, Glycidyl oder eine Gruppe $-CH_2-CH(OH)-Z$ bedeutet, worin Z H, Methyl oder Phenyl ist, oder $R_4$ eine Gruppe der Formel I bedeutet;
oder $R_3$ und $R_4$ zusammen den cyclischen Rest einer aliphatischen oder aromatischen 1,2- oder 1,3-Dicarbonsäure mit 4-8 C-Atomen bedeuten;
und wenn p 2 ist, $R_4$ $C_2$-$C_{12}$-Alkylen, $C_6$-$C_{12}$-Arylen, Xylylen, eine Gruppe $-CH_2-CH(OH)-CH_2-$ oder eine Gruppe $-CH_2-CH(OH)-CH_2-O-X-O-CH_2-CH(OH)-CH_2-$bedeutet, worin X $C_2$-$C_{10}$-Alkylen, $C_6$-$C_{15}$-Arylen oder $C_6$-$C_{12}$-Cycloalkylen ist, und im Falle, dass $R_3$ nicht Alkanoyl, Alkenoyl oder Benzoyl ist, $R_4$ auch ein zweiwertiger Acylrest einer aliphatischen, cycloaliphatischen oder aromatischen Dicarbonsäure oder Dicarbaminsäure mit 2-12 C-Atomen oder die Gruppe -CO- oder eine Gruppe der Formel III sein kann,

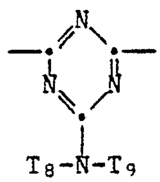

III

worin $T_8$ und $T_9$ unabhängig voneinander H, $C_1$-$C_{18}$-Alkyl, $C_3$-$C_5$-Alkenyl oder $C_6$-$C_{10}$-Aryl bedeuten oder $T_8$ und $T_9$ zusammen $C_4$-$C_6$-Alkylen oder 3-Oxapentamethylen bedeuten;
und wenn p 3 ist, $R_4$ Triazin-2,4,6-triyl bedeutet;
n 1 oder 2 ist,
und wenn n 1 ist, $R_5$ und $R_5'$ Wasserstoff, $C_1$-$C_{12}$-Alkyl, $C_2$-$C_{12}$-Alkenyl oder $C_7$-$C_{12}$-Aralkyl bedeuten oder $R_5$ und $R_5'$ zusammen $C_2$-$C_8$-Alkylen, $C_2$-$C_8$-Hydroxyalkylen oder $C_4$-$C_{22}$-Acyloxyalkylen bedeuten;
und wenn n 2 ist, $R_5$ und $R_5'$ zusammen die Gruppe $(-CH_2)_2C(CH_2-)_2$ bedeuten;
$R_6$ Wasserstoff, $C_1$-$C_{12}$-Alkyl, Allyl, Benzyl, Glycidyl oder $C_2$-$C_6$-Alkoxyalkyl bedeutet;
$R_7$, wenn n 1 ist, Wasserstoff, $C_1$-$C_{12}$-Alkyl, $C_3$-$C_5$-Alkenyl, $C_7$-$C_9$-Aralkyl, $C_5$-$C_7$-Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)_t-COOQ$ oder $-(CH_2)t-O-CO-Q$ bedeutet, worin t 1 oder 2 ist und Q $C_1$-$C_4$-Alkyl oder Phenyl bedeutet, und $R_7$, wenn n 2 ist, $C_2$-$C_{12}$-Alkylen, $C_6$-$C_{12}$-Arylen, oder eine Gruppe der Formel $-CH_2CH(OH)CH_2-O-X-O-CH_2CH(OH)CH_2-$bedeutet, worin X $C_2$-$C_{10}$-Alkylen, $C_6$-$C_{15}$-Arylen oder $C_6$-$C_{12}$-Cycloalkylen bedeutet;
k 2 bis 100 bedeutet;
$Q_1$ $-N(R_8)-$ oder -O- bedeutet, worin $R_8$ Wasserstoff, $C_1$-$C_{18}$-Alkyl, $C_5$-$C_7$-Cycloalkyl, $C_7$-$C_{12}$-Aralkyl, $C_6$-$C_{10}$-Aryl, Cyanethyl oder eine Gruppe der Formel $-CH_2-CH(R_9)-OH$ ist und $R_9$ wasserstoff, Methyl oder Phenyl bedeutet; $T_3$ Ethylen oder Propylen bedeutet oder die wiederkehrende Struktureinheit eines Copolymers aus einem $\alpha$-Olefin und einem Alkyl-acrylat oder -methacrylat bedeutet;
$T_{10}$ und $T_{11}$ unabhängig voneinander $C_2$-$C_{12}$-Alkylen bedeuten oder $T_{11}$ einen Rest der Formel III bedeutet;
q 2,3 oder 4 ist;
$T_{12}$ eine Gruppe $-N(R_5)-(CH_2)_a-N(R_5)-$ oder $-NH-(CH_2)_a-\overset{|}{N}-(CH_2)_b-\overset{|}{N}[(CH_2)_c-\overset{|}{N}]_dH$ bedeutet;
worin a, b und c unabhängig voneinander 2 oder 3 sind, d null oder 1 ist und e 2-10 ist;
$E_1$ und $E_2$ voneinander verschieden sind und entweder $>C=O$ oder -NH- bedeuten oder $E_1$ $>C=O$ ist und $E_2$ $-N(E_5)-$ ist, worin $E_5$ Wasserstoff, $C_1$-$C_{12}$-Alkyl oder $C_4$-$C_{22}$-Alkoxycarbonylalkyl bedeutet;
$E_3$ Wasserstoff, $C_1$-$C_{30}$-Alkyl, Phenyl, durch Cl oder $C_1$-$C_4$ Alkyl substituiertes Phenyl, Naphthyl oder $C_7$-$C_{12}$-Phenylalkyl bedeutet und $E_4$ Wasserstoff, $C_1$-$C_{30}$-Alkyl oder $C_7$-$C_{12}$-Phenylalkyl bedeutet, oder $E_3$ und $E_4$ zusammen $C_4$-$C_{17}$-Polymethylen bedeuten, das durch 1-4 $C_1$-$C_4$-Alkylgruppen substituiert sein kann.

Wenn $R_3$, $R_5$, $R_6$ oder $R_7$ $C_1$-$C_{12}$-Alkyl bedeutet, so kann dies unverzweigtes oder verzweigtes Alkyl sein und kann z.B. Methyl, Ethyl, n-Propyl, n-Butyl, sec.-Butyl, tert.-Butyl, n-Hexyl, n-Octyl, 2-Ethylhexyl, n-Nonyl, n-Decyl, n-Undecyl oder n-Dodecyl sein. $R_1$, $R_4$, $R_8$, $T_8$ und $T_9$ als $C_1$-$C_{18}$-Alkyl können dieselbe Bedeutung haben und darüberhinaus z.B. n-Tridecyl, n-Tetradecyl, n-Hexadecyl oder n-Octadecyl bedeuten.

Wenn $R_1$ einen einwertigen Acylrest einer Carbonsäure bedeutet, so kann dies z.B. ein Acetyl-, Stearoyl-, Benzoyl- oder $\beta$-(3,5-Di-tert.-butyl-4-hydroxyphenyl)-propionylrest sein.

Wenn $R_1$ oder $R_4$ einen zweiwertigen Acylrest einer Dicarbonsäure bedeutet, so kann dies z.B. der Rest von Adipinsäure, Bernsteinsäure, Suberinsäure, Sebacinsäure, Phthalsäure, Butyl-(3,5-di-tert.-butyl-4-hydroxybenzyl)malonsäure oder Bicycloheptendicarbonsäure sein.

$R_1$ oder $R_4$ als zweiwertiger Acylrest einer Dicarbonsäure kann z.B. der Rest von Hexamethylendicarbaminsäure oder von 2,4-Tolylendicarbaminsäure sein.

$R_3$, $R_4$, $R_7$ und $R_8$ als $C_5$-$C_7$-Cycloalkyl bedeuten vor allem Cyclohexyl.

$R_1$, $R_3$, $R_4$, $R_5$, $R_7$ und $R_8$ als Aralkyl sind insbesondere Benzyl oder Phenylethyl.

$R_1$, $R_4$, $R_7$ und $R_8$ als Aryl sind vorzugsweise Phenyl oder Naphthyl.

$R_3$ als $C_2$-$C_{18}$-Alkanoyl kann z.B. Acetyl, Propionyl, Butyryl, Octanoyl, Dodecanoyl, Hexadecanoyl oder Octadecanoyl sein. $R_3$ als $C_3$-$C_5$-Alkenoyl ist vorzugsweise Acryloyl oder Methacryloyl.

$R_1$, $R_4$, $R_5$ und $R_7$ als Alkenyl sind bevorzugt Allyl.

$R_1$, $R_4$, $R_7$, $T_{10}$ oder $T_{11}$ als $C_2$-$C_{12}$-Alkylen können z.B. 1,2-Ethylen, 1,3-Propylen, 2,2-Dimethyl-1,3-propylen, Tetra-, Hexa-, Octa-, Deca- oder Dodecamethylen sein.

$R_4$, $R_7$ und X als Arylen können z.B. Phenylen, Naphthylen oder 4,4′-Diphenylen sein. X kann auch z.B. Methylendiphenylen oder 2,2-propylendiphenylen sein. X als Cycloalkylen ist vorzugsweise Cyclohexylen. Wenn $R_5$ und $R_5'$ zusammen Alkylen oder Hydroxyalkylen bedeuten, so kann dies z.B. Ethylen, 1,2-Propylen, 1,3-Propylen, 2-Ethyl-1,3-propylen oder 2-Ethyl-2-hydroxymethyl-1,3-propylen sein. $R_5$ und $R_5'$ als Acyloxyalkylen ist beispielsweise 2-Ethyl-2-acetoxymethyl-1,3-propylen.

Sind irgendwelche Substituenten Alkoxyalkyl, so können diese z.B. Methoxymethyl, Ethoxymethyl, 2-Methoxyethyl, 2-Ethoxyethyl, 2-Tert.-butoxyethyl, 2-Isopropoxyethyl, 2-Ethoxypropyl oder 3-Propoxypropyl sein.

$R_7$ als Hydroxyalkyl kann z.B. 2-Hydroxyethyl, 2-Hydroxypropyl, 3-Hydroxypropyl, 2-Hydroxybutyl oder 4-Hydroxybutyl sein.

Wenn $T_8$ und $T_9$ zusammen $C_4$-$C_6$-Alkylen oder 3-Oxapentamethylen bedeuten, so bilden sie zusammen mit dem Stickstoffatom, an das sie gebunden sind, einen heterocyclischen Ring, z.B. einen Pyrrolidin-, Piperidin-, Methylpiperidin- oder Morpholinring.

Bevorzugte N-Formylverbindungen sind die Verbindungen der Formeln A, B, C und H.

Bevorzugt sind die Verbindungen der Formel A worin m 1, 2 oder 4 ist und wenn m 1 ist, R Wasserstoff oder ein Rest $-\overset{\overset{O}{\|}}{C}-R_{10}$ ist, worin $R_{10}$ Wasserstoff, $C_1$-$C_{17}$-Alkyl, $C_2$-$C_5$-Alkenyl, Phenyl, durch $C_1$-$C_4$-Alkyl, Halogen oder OH substituiertes Phenyl oder eine Gruppe

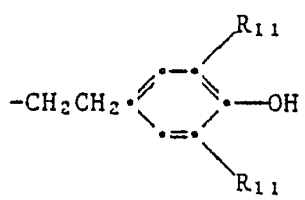

bedeutet und $R_{11}$ $C_1$-$C_4$-Alkyl ist,
und wenn m 2 ist, $R_1$ Xylylen oder einen Rest $-\overset{\overset{O}{\|}}{C}-R_{12}-\overset{\overset{O}{\|}}{C}-$ bedeutet, worin $R_{12}$ $C_1$-$C_8$-Alkylen, Phenylen, -NH-$R_{13}$-NH- oder eine Gruppe

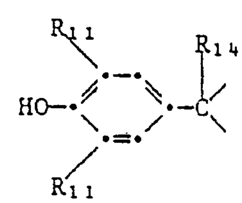

bedeutet, worin $R_{13}$ $C_2$-$C_8$-Alkylen oder Tolylen ist und $R_{14}$ $C_1$-$C_8$-Alkyl oder Benzyl bedeutet,
und wenn m 4 ist, $R_1$ ein Rest

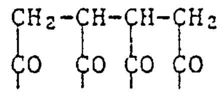

bedeutet.

Bevorzugt sind Verbindungen der Formel B, worin p 1 oder 2 ist, $R_3$ $C_1$-$C_5$-Alkanoyl, $C_3$-$C_5$-Alkenoyl oder eine Gruppe

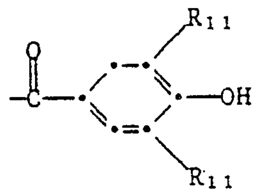

bedeutet, worin $R_{11}$ $C_1$-$C_4$-Alkyl ist,
und wenn p 1 ist, $R_4$ Wasserstoff, $C_1$-$C_4$-Alkyl oder Cyclohexyl bedeutet oder $R_3$ oder $R_4$ zusammen einen Rest
$-\overset{\overset{O}{\|}}{C}-R_{15}-\overset{\overset{O}{\|}}{C}-$ bilden, worin $R_{15}$ $-CH_2CH_2-$ oder $-CH=CH-$ oder o-Phenylen ist,
und wenn p 2 ist, $R_4$ $C_2$-$C_8$-Alkylen bedeutet.

Bevorzugt sind Verbindungen der Formel C, worin n 1 ist und $R_5$ und $R_5'$ zusammen $C_2$-$C_8$-Alkylen, $C_4$-$C_6$-Hydroxyalkylen oder $C_6$-$C_{12}$-Acyloxyalkylen bedeuten, oder worin n 2 ist und $R_5$ und $R_5'$ zusammen die Gruppe $(-CH_2)_2C(CH_2-)_2$ bedeuten.

Bevorzugt sind Verbindungen der Formel H, worin $E_1$ -CO- ist und $E_2$ -NH-ist und $E_3$ und $E_4$ zusammen $C_5$-$C_{11}$-Polymethylen bedeuten.

Beispiele für einzelne erfindungsgemäss verwendbare Verbindungen sind:

1. 1-Formyl-4-hydroxy-2,2,6,6-tetramethylpiperidin
2. 1-Formyl-4-salicyloyloxy-2,2,6,6-tetramethylpiperidin
3 1-Formyl-4-methacryloyloxy-2,2,6,6-tetramethylpiperidin
4. 1-Formyl-2,2,6,6-tetramethylpiperidin-4-yl-3,5-di-tert.-butyl-4-hydroxyhydrocinnamat
5. Di-(1-formyl-2,2,6,6-tetrametylpiperidin-4-yl)-phthalat
6. Di-(1-formyl-2,2,6,6-tetrametylpiperidin-4-yl)-isophthalat
7. Di-(1-formyl-2,2,6,6-tetrametylpiperidin-4-yl)-sebacat
8. Di-(1-formyl-2,2,6,6-tetrametylpiperidin-4-yl)-butyl-(3,5-di-tert.-butyl-4-hydroxybenzyl)-malonat
9. Hexan-1,6-bis-(4-carbamoyloxy-1-formyl-2,2,6,6-tetramethylpiperidin)
10. N,N'-Bis-(1-formyl-2,2,6,6-tetramethylpiperidin-4-yl)-hexamethylen-1,6-diacetamid
11. 4-(N-Cyclohexylacetamido)-1-formyl-2,2,6,6-tetramethylpiperidin
12. 4-Methacrylamido-1-formyl-2,2,6,6-tetramethylpiperidin
13. N-(1-Formyl-2,2,6,6-tetramethylpiperidin-4-yl)-epsilon-caprolactam
14. N-(1-Formyl-2,2,6,6-tetramethylpiperidin-4-yl)-succinimid
15. N-(1-Formyl-2,2,6,6-tetramethylpiperidin-4-yl)-maleinimid
16. 8-Aza-2,7,7,9,9-pentamethyl-8-formyl-1,4-dioxa-spiro[4.5]decan
17. 9-Aza-3-hydroxymethyl-3-ethyl-9-formyl-8,8,10,10-tetramethyl-1,5-dioxa-spiro[5.5]undecan
18. 3-n-Octyl-1,3,8-triaza-8-formyl-7,7,9,9-tetramethyl-spiro[4.5]decan-2,4-dion
19. 8-Formyl-2,7,7,9,9-pentamethyl-2-hexyl-1-oxa-3,8-diazaspiro[4.5]decan-4-on
20. 3-Formyl-2,2,4,4-tetramethyl-7-oxa-3,20-diaza-dispiro[5.1.11.2]heneicosan-21-on
21. N, N', N'', N'''-Tetrakis-(2,4-bis-[N-(1-formyl-2,2,6,6-tetramethylpiperidin-4-yl)-butylamino]-s-triazin-6-yl)-1,5,8,12-tetraazadodecan
22. N-Formylderivat des Polykondensationsproduktes von 2,4-Dichlor-6-tert.-octylamino-s-triazin und N,N'-Bis(2,2,6,6-tetramethylpiperidin-4-yl)-hexamethylendiamin
23. N-Formylderivat des Polykondensationsproduktes von 2,6-Dichlor-6-morpholino-s-triazin und N,N'-Bis(2,2,6,6-tetramethylpiperidin-4-yl)hexamethylendiamin
24. 4-Benzoyloxy-1-formyl-2,2,6,6-tetramethylpiperidin
25. 3-Formyl-2,2,4,4-tetramethyl-20-(2-lauryloxy-carbonyl-ethyl-7-oxa-3,20-diazadispiro[5.1.11.2]-heneicosan-21-on

26. Di-(1-formyl-2,3,6-trimethyl-2,6-diethylpiperidin-4-yl)-phthalat
27. Di-(1-formyl-2,2,6,6-tetramethylpiperidin-4-yl)-succinat
28. Di-(1-formyl-2,2,6,6-tetramethylpiperidin-4-yl)-adipat
29. 1-Formyl-2,2,6,6-tetramethylpiperidin-4-yl-stearat
30. 1-Formyl-2,2,6,6-tetramethylpiperidin-4-yl-acrylat
31. 4-(4-Tert.-butyl-benzoyloxy)-1-formyl-2,2,6,6-tetramethylpiperidin
32. 1-Formyl-2,2,6,6-tetramethylpiperidin-4-ylester von 4-Hydroxy-3,5-di-tert.-butylbenzoesäure
33. α,α′-Di-(1-formyl-2,2,6,6-tetramethylpiperidin-4-oxy)-p-xylol
34. Di-(1-formyl-2,2,6,6-tetramethylpiperidin-4-yl)-diethylmalonat
35. N-Butyl-N-(1-formyl-2,2,6,6-tetramethylpiperidin-4-yl)-4-hydroxy-3,5-di-tert.-butylbenzamid
36. Tetrakis-(1-formyl-2,2,6,6-tetramethylpiperidin-4-yl)-butan-1,2,3,4-carboxylat

Die N-Formylderivate der vorliegenden Erfindung können allgemein hergestellt werden durch Umsetzung der entsprechenden N-unsubstituierten Verbindungen mit Essigsäure-Ameisensäure-Anhydrid in Gegenwart eines Lösungsmittels, wie z.B. Tetrahydrofuran, bei Temperaturen von 0° C bis Raumtemperatur.

Die N-unsubstituierten Ausgangsverbindungen sind im Handel erhältlich oder können nach bekannten Methoden hergestellt werden.

Erfindungsgemäss werden die N-formylierten gehinderten Amine als Stabilisatoren für Anstrichmittel verwendet. Anstrichmittel sind z.B. Lacke, Farben oder Firnisse. Sie enthalten stets ein filmbildendes Bindemittel neben anderen fakultativen Bestandteilen. Die Härtung der Anstrichmittel kann bei Raumtemperatur geschehen (kalt-härtende Anstrichmittel) oder bei erhöhter Temperatur (Einbrennlacke).

Beispiele für Anstrichmittel sind solche auf Basis eines Acryl-, Alkyd-, Polyester-, Polyurethan-, Epoxid- oder Aminoplastharzes, sowie von Gemischen solcher Harze. Weitere Beispiele geeigneter Bindemittel sind Vinylharze wie Polyvinylacetat, Polyvinylbutyral, Polyvinylchlorid und deren Copolymere, Celluloseester, chlorierte Kautschuke, Phenolharze, Styrol-Butadien-Copolymere oder trocknende Oele.

Die Härtung mancher Anstrichmittel kann durch Katalysatoren beschleunigt werden. Von besonderer Bedeutung ist die Stabilisierung von sauer katalysierten heiss-härtbaren Anstrichmitteln. Dies sind meist Anstrichmittel auf Basis von Acryl-, Alkyd- und Polyesterharzen und deren Gemischen mit Melaminharzen. Als saure Katalysatoren eignen sich nichtflüchtige starke Säuren, wie z.B. Phosphorsäure, organischen Sulfosäuren oder Maleinsäurehalbester.

Die Anstrichmittel können lösungsmittelhaltig oder lösungsmittelfrei sein oder sie können wässrige Systeme (Dispersionen, Emulsionen, Lösungen) darstellen. Sie können pigmentiert oder unpigmentiert sein. Die Pigmente können anorganische, organische oder metallische Pigmente sein.

Die N-formylierten gehinderten Amine werden vorzugsweise in einer Menge von 0,1 bis 5 Gew.-%, bezogen auf das feste Bindemittel, dem Anstrichmittel zugesetzt.

Ausser diesen N-Formylverbindungen kann das Anstrichmittel noch andere Lichtschutzmittel enthalten, insbesondere UV-Absorber aus der Gruppe der Benztriazole, der Benzophenone, Aryl-s-triazine, α-Cyanacrylate oder Oxalanilide.

Beispiele für solche UV-Absorber sind:

a) 2-(2′-Hydroxyphenyl)-benztriazole, wie z.B. das 5′-Methyl-,3′,5′-Di-tert.-butyl-, 5′-tert.-Butyl-, 5′-(1,1,3,3-Tetramethyl-butyl)-, 5-Chlor-3′,5′-di-tert.-butyl-, 5-Chlor-3′-tert.-butyl-5′-methyl-, 3′-sec.Butyl-5′-tert.-butyl, 4′-Octoxy-, 3′,5′-Di-tert.-amyl-, 3′,5′-Bis-(α,α-dimethylbenzyl)-Derivat.

b) 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2′,4′-Trihydroxy-, 2′-Hydroxy-4,4′-dimethoxy-Derivat.

c) Hydroxyphenyl-s-triazine wie z.B. das 2,6-Bis-(2,4-dimethylphenyl)-4-(2-hydroxy-4-octyloxyphenyl)-s-triazin oder das entsprechende 4-(2,4-dihydroxyphenyl)-Derivat.

d) Cyanacrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-Cyanovinyl)-2-methyl-indolin.

e) Oxalsäureanilide, wie z.B. 4,4′-Di-octyloxy-oxanilid, 2,2′-Di-octyloxy-5,5′-di-tert.-butyl-oxanilid, 2,2′-Di-dodecyloxy-5,5′-di-tert.-butyloxanilid, 2-Ethoxy-2′-ethyl-oxanilid, N,N′-Bis-(3-dimethylaminopropyl)-oxalamid, 2-Ethoxy-5-tert.-butyl-2′-ethyloxanilid und dessen Gemisch mit 2-Ethoxy-2′-ethyl-5,4′-di-tert.-butyl-oxanilid, Gemische von o- und p-Methoxy- sowie von o- und p-Ethoxy-disubstituierten Oxaniliden.

Von besonderem Interesse ist die Kombination der erfindungsgemässen N-Formylverbindungen mit Benztriazol-Lichtschutzmitteln von relativ hohem Molekulargewicht und niedriger Flüchtigkeit. Beispiele hiefür sind:
2-[2-Hydroxy-3,5-di(α,α-dimethylbenzyl)-phenyl]-benztriazol,

2-[2-Hydroxy-3,5-di(tert.-octyl)-phenyl]-benztriazol,
2-[2-Hydroxy-3-tert.-octyl-5-α,α-dimethylbenzyl)-phenyl]-benztriazol,
2-{2-Hydroxy-3-tert.-butyl-5-[2-ω-hydroxy-octa(ethylenoxy)-carbonyl]ethylphenyl}-benztriazol,
2-[2-Hydroxy-3-tert.-butyl-5-(2-octyloxycarbonylethyl)-phenyl]benztriazol,
2-(2-Hydroxy-3-sec.-dodecyl-5-methyl-phenyl)-benztriazol,
2-(2-Hydroxy-3,5 di-tert.-amyl-phenyl)-benztriazol,
2-(2-Hydroxy-3-sec.-dodecyl-5-tert.-butyl-phenyl)-benztriazol,
Hexamethylen-di{β-[3-tert.-butyl-4-hydroxy-5-(2-benzotriazolyl)-phenyl]propionat}
sowie die 5-Chlor-Derivate dieser Benztriazole.

Bei Verwendung einer solchen Kombination von N-Formylverbindung und UV-Absorber beträgt die Summe beider Lichtschutzmittel vorzugsweise 0,2 bis 20 Gew.-%, bezogen auf das feste Bindemittel des Anstrichmittels.

Weiter Zusätze,die das Anstrichmittel enthalten kann, sind Antioxidantien, Phosphite, Korrosionsschutzmittel, Weichmacher, Haftverbesserer, Verlaufhilfsmittel oder Härtungskatalysatoren.

Das Anstrichmittel kann nach den üblichen Verfahren auf das Substrat aufgebracht werden, z.B. durch Sprühen, Tauchen, Streichen, Rakeln, Walzen oder durch Elektroabscheidung. Meist werden mehrere Schichten des Anstrichmittels aufgetragen. Bei der Zweischicht-Lackierung enthält die untere Schicht das Pigment, die obere Schicht ist pigmentfrei. In solchen Mehrschichtsystemen kann der erfindungsgemässe Stabilisator in die obere, in die untere oder in beide Schichten zugesetzt werden. Vorzugsweise setzt man den Stabilisator der obersten Schicht zu.

Wenn die N-Formylverbindung reaktive Gruppen enthält, z.B. Hydroxyl-, Carboxyl-, Glycidyl- oder Aminogruppen, so können diese mit dem Bindemittelharz des Anstrichmittels reagieren. Es kommt dadurch zu einem chemischen Einbau des Stabilsators in das Bindemittel mit dem Effekt, dass der Stabilisator nicht durch Migration, Verflüchtigung oder Elution verlorengehen kann.

Als Substrat, auf das das Anstrichmittel aufgebracht wird, kommen vorallem Gegenstände aus Metall oder Kunststoff in Frage. Von besonderem Interesse sind die so stabilisierten Anstrichmittel für die Lackierung von Fahrzeugkarosserien. Sie eignen sich auch als Reparaturlacke.

Die Stabilisierung mit N-formylierten gehinderten Aminen verleiht den Anstrichen eine längere Haltbarkeit ohne dass die Härtung verzögert wird. Gegenüber den N-unsubstituierten Aminen ist die Vergilbung geringer und wird die Härtung in Gegenwart von sauren Katalysatoren weniger beeinträchtigt.

Die folgenden Beispiele beschreiben die Herstellung der N-formylierten gehinderten Amine und ihre Verwendung in Anstrichmitteln verschiedener Art. Darin bedeuten Teile und Prozente Gewichtsteile und Gewichtsprozente.

Beispiel 1: Di-(1-formyl-2,2,6,6-tetramethylpiperidin-4-yl)-phthalat

Eine Lösung von 20 g Di-(2,2,6,6-tetramethylpiperidin-4-yl)-phthalat in 200 ml Tetrahydrofuran wird auf 5-10 °C gekühlt. Dann werden 9,9 g frisch bereitetes Essigsäure-Ameisensäure-Anhydrid zugetropft. Das Reaktionsgemisch wird 1 h bei 5-10 °C und dann 2 h bei Raumtemperatur gerührt. Dann werden weitere 9,9 g des gemischten Anhydrids sowie $Na_2CO_3$ zur Neutralisierung der entstandenen Essigsäure) zugegeben und weitere 15 h bei Raumtemperatur gerührt.

Das Reaktionsgemisch wird dann mit 300 ml Wasser und 100 ml Ethylacetat versetzt. Die organische Phase wird abgetrennt, mit 1 N HCl und mit gesättigter $NaHCO_3$-Lösung gewaschen über $MgSO_4$ getrocknet und eingedampft. Das hinterbleibende Oel wird über Silicagel chromatographiert (1:1 Hexan/Ethylacetat) und man erhält 6,3 g eines farblosen Festkörpers, der bei 146-148 °C schmilzt.

| | | | | | |
|---|---|---|---|---|---|
| Analyse: | berechnet | C 67,2 | H 8,1 | N 5,6 % | |
| | gefunden | C 67,2 | H 8,0 | N 5,7 % | ] |

Beispiel 2: Di-(1-formyl-2,2,6,6-tetramethylpiperidin-4-yl)-isophtalat

Die Verbindung wird analog zu Beispiel I hergestellt unter Verwendung des entsprechenden Isophthalates. Fp 137-145 °C.

| Analyse: | berechnet | C 67,2 | H 8,1 | N 5,6 % |
|---|---|---|---|---|
| | gefunden | C 67,4 | H 8,3 | N 5,4 % |

Beispiel 3: Di-(1-formyl-2,2,6,6-tetramethylpiperidin-4-yl)-sebacat

Die Verbindung wird analog Beispiel 1 hergestellt unter Verwendung des entsprechenden Sebacates. Fp. 137-139 °C.

| Analyse: | berechnet | C 67,1 | H 9,8 | N 5,2 %] |
|---|---|---|---|---|
| | gefunden | C 67,0 | H 9,9 | N 5,2 % |

Beispiel 4: 1-Formyl-4-(4-tert.-butylbenzoyloxy)-2,2,6,6-tetramethylpiperidin

Die Verbindung wird analog Beispiel 1 hergestellt unter Verwendung des entsprechenden tert. Butylbenzoates. Fp. 126-128 °C.

| Analyse: | berechnet | C 73,0 | H 9,0 | N 4,1 % |
|---|---|---|---|---|
| | gefunden | C 73,2 | H 9,3 | N 4,0 % |

Beispiel 5: Stabilisierung eines thermoplastischen Acrylharz-Lackes

Ein im Handel erhältlicher hellblauer, metallisch pigmentierter Acrylharzlack wird mit den angegebenen Stabilisatoren versetzt und auf Eisenbleche gespritzt, die mit einem Alkydharzprimer grundiert waren. Nach 2 Wochen Lagerung bei Raumtemperatur werden die Proben in einem Weatherometer Bestrahlungsgerät 1250 h mit UV-Licht bestrahlt. Nachher wird der 60 °-Glanz der Proben nach ASTM D-523 gemessen.

| N-Formyl-verbindung | UV-Absorber | 60 °-Glanz |
|---|---|---|
| - | - | 2 |
| 2 % I | 2 % A | 28 |
| 2 % II | 2 % A | 33 |
| 2 % III | 2 % A | 20 |
| I = Verbindung von Beispiel 1<br>II = Verbindung von Beispiel 2<br>III = Verbindung von Beispiel 3<br>A = 2-[2-Hydroxy-3,5-di(α,α-dimethylbenzyl)-phenyl]-benztriazol | | |

Die angegebenen Mengen beziehen sich auf das feste Bindemittel.

Beispiel 6: Stabilisierung eines Acryl-Alkydharz-Reparaturlackes

Ein im Handel erhältlicher hellblauer Acryl-Alkydharz-Lack, der mit einem Aluminium-Pigment metallisiert ist, wird mit den angegebenen Mengen bezogen auf das feste Bindemittel) an Stabilisator versetzt und auf Eisenbleche gespritzt, die mit einem Alkydharzprimer grundiert waren. Die Proben werden 14 Tage bei

Raumtemperatur härten gelassen und dann einer Freibewitterung ausgesetzt auf eine Dauer von 10 Monaten und unter einem Winkel von 5° S. Nach der Bewitterung wird der 20°-Glanz gemäss ASTM D-523-80 gemessen.

| N-Formyl-verbindung | UV-Absorber | 20°-Glanz |
|---|---|---|
| - | - | 4 |
| 2 % III | 3 % B | 16 |
| B = 2-{2-Hydroxy-3-tert.-butyl-5-[2-(ω-hydroxy-octa(ethylenoxy)-carbonyl)]-ethyl-phenyl}-benztriazol | | |

Beispiel 7: Stabilisierung eines mittelöligen Alkydharz-Lackes.

Ein im Handel erhältlicher hellblauer, mit Al-Pigment metallisierter mittelöliger Alkydharz-Lack wird mit den angegebenen Mengen (bezogen auf das feste Bindemittel) Stabilisator versetzt und auf Stahlbleche gespritzt, die mit einem Epoxid-Primer grundiert waren.

Die Proben wurden 2 Wochen bei Raumtemperatur gehärtet und dann einer Freibewitterung ausgesetzt unter einem Winkel von 5° S und auf die Dauer von 10 Monaten. Nach der Bewitterung wird der 20°-Glanz der Proben gemessen.

| N-Formyl-verbindung | UV-Absorber | 20°-Glanz |
|---|---|---|
| - | - | 1 |
| 2 % III | 3 % B | 27 |

Beispiel 8: Stabilisierung eines Acryl-Alkydharz-Reparaturlackes, der mit Isocyanat vernetzt wird.

Ein im Handel erhältlicher silbermetallischer Acryl-Alkydharz-Lack, enthaltend ein aliphatisches Isocyanat als Vernetzter wird, wird mit den angegebenen Mengen (bezogen auf das Bindemittel) an Stabilisator versetzt und auf Eisenbleche gespritzt, die mit einem schwarzen Alkydharzprimer grundiert sind. Nach 2 Wochen Härtung bei Raumtemperatur werden die Proben einer Freibewitterung unter 5° S für die Dauer von 10 Monaten ausgesetzt. Nach der Beweitterung wird der 20°-Glanz gemessen.

| N-Formyl-verbindung | UV-Absorber | 20°-Glanz |
|---|---|---|
| - | - | 7 |
| 2 % III | 3 % B | 58 |

Beispiel 9: Stabilisierung eines säurekatalysierten Acrylharz-Einbrennlackes mit hohem Festkörperanteil.

Ein 50 % Festkörper enthaltender Acrylharz-Einbrennlack wird mit 0,5 % (bezogen auf das Bindemittel) p-Toluolsulfonsäure und dem angegebenen Stabilisator versetzt. Das Acrylharz (Acryloid® AT 400, Rohm & Haas) ist ein Copolymerisat aus Hydroxyethyl-methacrylat, Methylmethacrylat, Styrol, Butylacrylat und Butylmethacrylat, enthaltend ein Melaminharz als Vernetzer.

Stahlbleche, die mit einem Primer auf Basis von Polyester-Epoxidharz grundiert sind, werden zuerst mit einem silbermetallisch pigmentierten Grundlack und dann mit dem unpigmentierten Lack bespritzt. Der Grundlack wird in einer Dicke von 20 µm aufgetragen und 3 Minuten an der Luft trocknen gelassen. Darauf wird der Klarlack in einer Dicke von 38 µm gespritzt. Nach 15 Minuten Trocknung an der Luft werden die

Proben 30 Minuten bei 121 °C eingebrannt.

Dem Grundlack werden 3 % (bezogen auf festes Bindemittel) des UV-Absorbers B zugesetzt, dem Klarlack jeweils 1 % einer N-Formylverbindung und vergleichsweise auch des UV-Absorbers B.

Nach dem Einbrennen werden die Proben 3 Wochen in einem klimatisierten Raum gelagert und anschliessend einer Bewitterung im QUV-Gerät gemäss ASTM G-3/77 unterworfen. In diesem Test werden die Proben abwechselnd 4 Stunden bei 50 °C einer feuchten Atmosphäre ausgesetzt und 8 Stunden bei 70 °C mit UV-Licht bestrahlt. In regelmässigen Abständen wird der 20 °-Glanz der Proben gemessen. Die folgende Tabelle gibt die Bewitterungszeit bis zu 50 % Abfall des Glanzes an.

| Zusatz im Klarlack | Zusatz im Grundlack | Zeit bis 50 % Glanzverlust |
|---|---|---|
| - | - | 1000 h |
| 1 % I | 3 % B | 3950 h |
| 1 % II | 3 % B | 4000 h |
| 1 % III | 3 % B | 4600 h |
| 1 % B | 3 % B | 2250 h |

Die Beispiele 5-9 zeigen die hervorragende Stabilisator-Wirkung der N-Formylverbindungen.

## Ansprüche

1. Gegen Licht stabilisiertes Anstrichmittel, enthaltend eine stabilisierende Menge eines N-formylierten gehinderten Amins mit der Gruppe

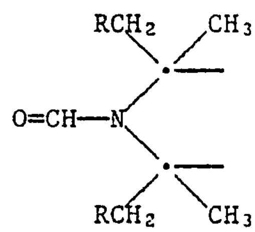

worin R Wasserstoff oder Methyl ist.

2. Anstrichmittel gemäss Anspruch 1, enthaltend ein N-formyliertes Amin der Formel A bis H.

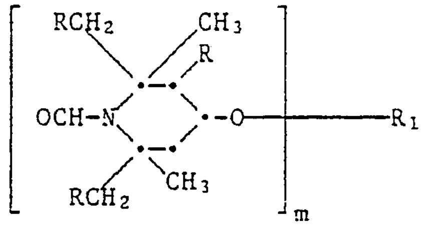

A

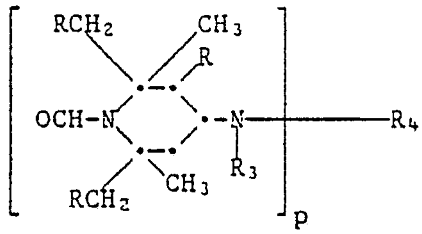

B

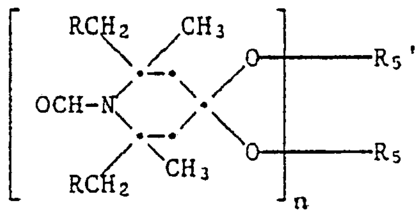

C

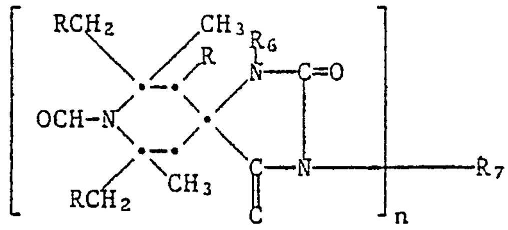

D

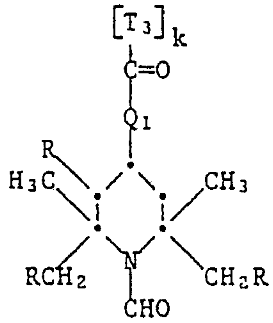

E

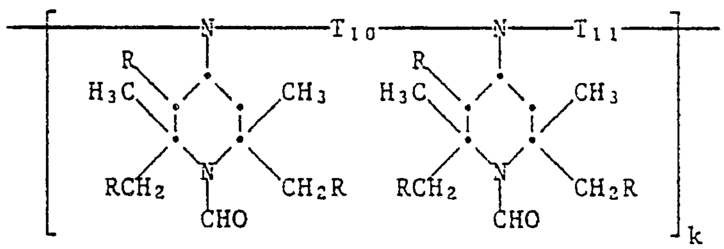

F

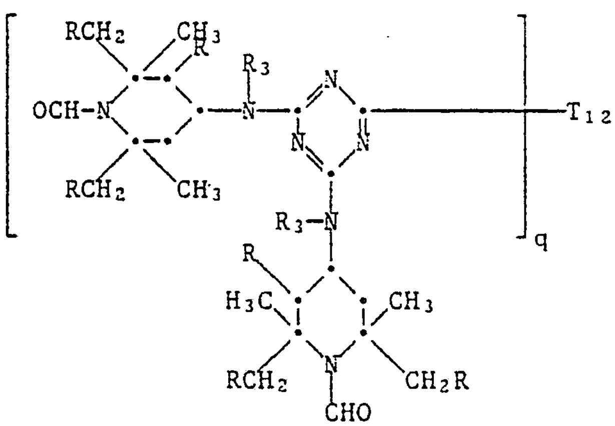

G

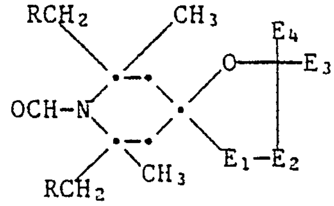

H

worin R Wasserstoff oder Methyl ist, m 1-4 ist und wenn m 1 ist, $R_1$ Wasserstoff, $C_1$-$C_{18}$-Alkyl, durch ein oder mehrere Sauerstoffatome unterbrochenes $C_3$-$C_{18}$-Alkyl, $C_2$-$C_{12}$-Alkenyl, $C_6$-$C_{10}$-Aryl, $C_7$-$C_{12}$-Aralkyl, Glycidyl oder einen einwertigen Acylrest bedeutet, der abgeleitet ist von einer aliphatischen, cycloaliphatischen, araliphatischen oder aromatischen Carbonsäure oder Carbaminsäure mit 2-18 C-Atomen, oder $R_1$ einen Rest der Formel I bedeutet,

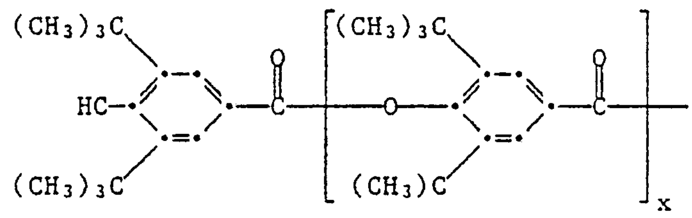

I

worin x 0 oder 1 ist, oder einen Rest der Formel II bedeutet

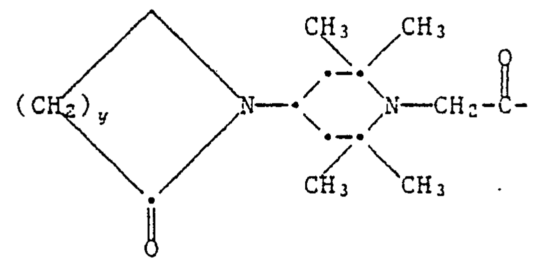

II

worin y 2-4 ist;

und wenn m 2 ist, $R_1$ $C_2$-$C_{12}$-Alkylen, $C_4$-$C_{12}$-Alkenylen, Xylylen oder einen zweiwertigen Acylrest bedeutet, der abgeleitet ist von einer aliphatischen, cycloaliphatischen, araliphatischen oder aromatischen Dicarbonsäure oder Dicarbaminsäure mit 2-12 C-Atomen; und wenn m 3 ist, $R_1$ einen dreiwertigen Acylrest einer aliphatischen, cycloaliphatischen oder aromatischen Tricarbonsäure mit 4-15 C-Atomen bedeutet;

und wenn m 4 ist, $R_1$ einen vierwertigen Acylrest einer aliphatischen oder aromatischen Tetracarbonsäure mit 6-18 C-Atomen bedeutet;

p 1, 2 oder 3 ist,

$R_3$ Wasserstoff, $C_1$-$C_{12}$-Alkyl, $C_5$-$C_7$-Cycloalkyl, $C_7$-$C_9$-Aralkyl, $C_1$-$C_{18}$-Alkanoyl, $C_3$-$C_5$-Alkenoyl oder Benzoyl bedeutet, und wenn p 1 ist, $R_4$ Wasserstoff, $C_1$-$C_{18}$-Alkyl, $C_5$-$C_7$-Cycloalkyl, $C_2$-$C_8$-Alkenyl, $C_6$-$C_{10}$-Aryl, $C_7$-$C_9$-Aralkyl, Glycidyl oder eine Gruppe -$CH_2$-CH(OH)-Z bedeutet, worin Z H, Methyl oder Phenyl ist, oder $R_4$ eine Gruppe der Formel I bedeutet;

oder $R_3$ und $R_4$ zusammen den cyclischen Rest einer aliphatischen oder aromatischen 1,2- oder 1,3-Dicarbonsäure mit 4-8 C-Atomen bedeuten;

und wenn p 2 ist, $R_4$ $C_2$-$C_{12}$-Alkylen, $C_6$-$C_{12}$-Arylen, Xylylen, eine Gruppe -$CH_2$-CH(OH)-$CH_2$- oder eine Gruppe -$CH_2$-CH(OH)-$CH_2$-O-X-O-$CH_2$-CH(OH)-$CH_2$-bedeutet, worin X $C_2$-$C_{10}$-Alkylen, $C_6$-$C_{15}$-Arylen oder $C_6$-$C_{12}$-Cycloalkylen ist, und im Falle, dass $R_3$ nicht Alkanoyl, Alkenoyl oder Benzoyl ist, $R_4$ auch ein zweiwertger Acylrest einer aliphatischen, cycloaliphatischen oder aromatischen Dicarbonsäure oder Dicarbaminsäure mit 2-12 C-Atomen oder die Gruppe -CO- oder eine Gruppe der Formel III sein kann,

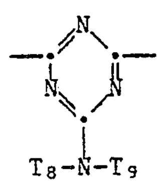

III,

worin $T_8$ und $T_9$ unabhängig voneinander H, $C_1$-$C_{18}$-Alkyl, $C_3$-$C_5$-Alkenyl oder $C_6$-$C_{10}$-Aryl bedeuten oder $T_8$ und $T_9$ zusammen $C_4$-$C_6$-Alkylen oder 3-Oxapentamethylen bedeuten;

und wenn p 3 ist, $R_4$ Triazin-2-4-6-triyl bedeutet;

n 1 oder 2 ist,

und wenn n 1 ist, $R_5$ und $R_5'$ Wasserstoff, $C_1$-$C_{12}$-Alkyl, $C_2$-$C_{12}$-Alkenyl oder $C_7$-$C_{12}$-Aralkyl bedeuten oder $R_5$ und $R_5'$ zusammen $C_2$-$C_8$-Alkylen, $C_2$-$C_8$-Hydroxyalkylen oder $C_4$-$C_{22}$-Acyloxyalkylen bedeuten;

und wenn n 2 ist, $R_5$ und $R_5'$ zusammen die Gruppe $(-CH_2)_2C(CH_2-)_2$ bedeuten;

$R_6$ Wasserstoff, $C_1$-$C_{12}$-Alkyl, Allyl, Benzyl, Glycidyl oder $C_2$-$C_6$-Alkoxyalkyl bedeutet;

$R_7$, wenn n 1 ist, Wasserstoff, $C_1$-$C_{12}$-Alkyl, $C_3$-$C_5$-Alkenyl, $C_7$-$C_9$-Aralkyl, $C_5$-$C_7$-Cycloalkyl, $C_2$-$C_4$-Hydroxyalkyl, $C_2$-$C_6$-Alkoxyalkyl, $C_6$-$C_{10}$-Aryl, Glycidyl oder eine Gruppe der Formel $-(CH_2)_t$-COOQ oder --

$(CH_2)_t$-O-CO-Q bedeutet, worin t 1 oder 2 ist und Q $C_1$-$C_4$-Alkyl oder Phenyl bedeutet, und $R_7$, wenn n 2 ist, $C_2$-$C_{12}$-Alkylen, $C_6$-$C_{12}$-Arylen, oder eine Gruppe der Formel $-CH_2CH(OH)CH_2$-O-X-$CH_2CH(OH)CH_2$- bedeutet, worin X $C_2$-$C_{10}$-Alkylen,$C_6$-$C_{15}$-Arylen oder $C_6$-$C_{12}$-Cycloalkylen bedeutet;
k 2 bis 100 bedeutet;
$Q_1$-$N(R_8)$- oder -O- bedeutet, worin $R_8$ Wasserstoff, $C_1$-$C_{18}$-Alkyl, $C_5$-$C_7$-Cycloalkyl, $C_7$-$C_{12}$-Aralkyl, $C_6$-$C_{10}$-Aryl, Cyanethyl oder eine Gruppe der Formel $-CH_2-CH(R_9)-OH$ ist und $R_9$ Wasserstoff, Methyl oder Phenyl bedeutet;
$T_3$ Ethylen oder Propylen bedeutet oder die wiederkehrende Struktureinheit eines Copolymers aus einem α-Olefin und einem Alkyl-acrylat oder -methacrylat bedeutet;
$T_{10}$ und $T_{11}$ unabhängig voneinander $C_2$-$C_{12}$-Alkylen bedeuten oder $T_{11}$ einen Rest der Formel III bedeutet;
q 2, 3 oder 4 ist;
$T_{12}$ eine Gruppe $-N(R_5)-(CH_2)_e-N(R_5)-$ oder $-NH-(CH_2)_a-\overset{|}{N}-(CH_2)_b-\overset{|}{N}\{(CH_2)_c-\overset{|}{N}\}_d-H$ bedeutet, worin a, b und c unabhängig voneinander 2 oder 3 sind, d null oder 1 ist und e 2-10 ist;
$E_1$ und $E_2$ voneinander verschieden sind und entweder >C=O oder -NH- bedeuten oder $E_1$ >C=O ist und $E_2$ $-N(E_5)-$ ist, worin $E_5$ Wasserstoff, $C_1$-$C_{12}$-Alkyl oder $C_4$-$C_{22}$-Alkoxycarbonylalkyl bedeutet;
$E_3$ Wasserstoff, $C_1$-$C_{30}$-Alkyl, Phenyl, durch Cl oder $C_1$-$C_4$-Alkyl substituiertes Phenyl, Naphthyl oder $C_7$-$C_{12}$-Phenylalkyl bedeutet und $E_4$ Wasserstoff, $C_1$-$C_{30}$-Alkyl oder $C_7$-$C_{12}$-Phenylalkyl bedeutet, oder $E_3$ und $E_4$ zusammen $C_4$-$C_{17}$-Polymethylen bedeuten, das durch 1-4-Alkylgruppen substituiert sein kann.

3. Anstrichmittel gemäss Anspruch 2 enthaltend eine Verbindung der Formel A, B, C oder H.

4. Anstrichmittel gemäss Anspruch 2 enthaltend eine Verbindung der Formel A, worin m 1, 2 oder 4 ist, und wenn m 1 ist, $R_1$ Wasserstoff oder ein Rest
$-\overset{\overset{O}{\|}}{C}-R_{10}$ ist, worin $R_{10}$ Wasserstoff, $C_1$-$C_{17}$-Alkyl, $C_2$-$C_5$-Alkenyl, Phenyl, durch $C_1$-$C_4$-Alkyl, Halogen oder OH substituiertes Phenyl oder eine Gruppe

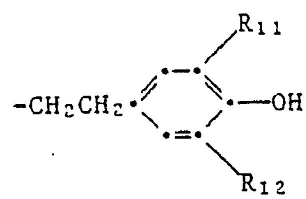

bedeutet und $R_{11}$ $C_1$-$C_4$-Alkyl ist,
und wenn m 2 ist, $R_1$ Xylylen oder einen Rest
$-\overset{\overset{O}{\|}}{C}-R_{12}-\overset{\overset{O}{\|}}{C}-$ bedeutet, worin $R_{12}$ $C_1$-$C_8$-Alkylen, Phenylen, $-NH-R_{13}-NH-$ oder eine Gruppe

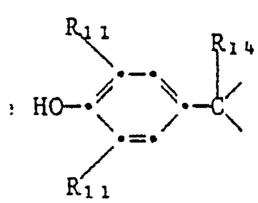

bedeutet, worin $R_{13}$ $C_2$-$C_8$-Alkylen oder Tolylen ist und $R_{14}$ $C_1$-$C_8$-Alkyl oder Benzyl bedeutet,
und wenn m 4 ist, R einen Rest

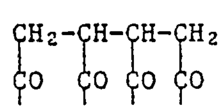

bedeutet.

5. Anstrichmittel gemäss Anspruch 2, enthaltend eine Verbindung der Formel B worin p 1 oder 2 ist, $R_3$ $C_1$-$C_5$-Alkanoyl, $C_3$-$C_5$-Alkenoyl oder eine Gruppe

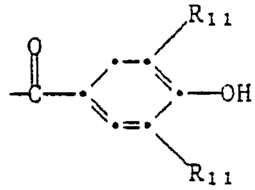

bedeutet, worin $R_{11}$ $C_1$-$C_4$-Alkyl ist, und wenn p 1 ist, $R_4$ Wasserstoff, $C_1$-$C_4$-Alkyl oder Cyclohexyl bedeutet oder $R_3$ und $R_4$ zusammen einen Rest

$-\overset{O}{\overset{\|}{C}}-R_{15}-\overset{O}{\overset{\|}{C}}-$ bilden, worin $R_{15}$ $-CH_2CH_2-$ oder $-CH=CH-$ oder o-Phenylen ist, und wenn p 2 ist, $R_4$ $C_2$-$C_8$-Alkylen bedeutet.

6. Anstrichmittel gemäss Anspruch 2, enthaltend eine Verbindung der Formel C, worin n 1 ist und $R_5$ und $R_5'$ zusammen $C_2$-$C_8$-Alkylen, $C_4$-$C_6$-Hydroxyalkylen oder $C_6$-$C_{12}$-Acyloxyalkylen bedeuten, oder worin n 2 ist und $R_5$ und $R_5'$ zusammen die Gruppe $(-CH_2)_2C(CH_2-)_2$ bedeuten.

7. Anstrichmittel gemäss Anspruch 2, enthaltend eine Verbindung der Formel H, worin $E_1$ -CO- ist und $E_2$ -NH- ist und $E_3$ und $E_4$ zusammen $C_5$-$C_{11}$-Polymethylen bedeuten.

8. Anstrichmittel gemäss Anspruch 4, enthaltend als Stabilisator Di-(1-formyl-2,2,6,6-tetramethylpiperidin-4-yl)-phthalat, Di-(1-formyl-2,2,6,6-tetramethylpiperidin-4-yl)-isophthalat oder Di-(1-formyl-2,2,6,6-tetramethylpiperidin-4-yl)-sebacat.

9. Anstrichmittel gemäss Anspruch 1 auf Basis eines Acryl-, Alkyd-, Polyester-, Polyurethan-, Epoxid- oder Aminoplastharzes oder von Gemischen solcher Harze.

10. Anstrichmittel gemäss Anspruch 1 auf Basis eines sauer katalysierten heiss-härtbaren Acryl-, Alkyd- oder Polyesterharzes oder von deren Gemisch mit einem Melaminharz.

11. Anstrichmittel gemäss Anspruch 1, enthaltend 0,1 bis 5 Gew.-% eines N-formylierten gehinderten Amins, bezogen auf das feste Bindemittel.

12. Anstrichmittel gemäss Anspruch 1 enthaltend a) ein N-formyliertes gehindertes Amin und b) einen UV-Absorber aus der Gruppe der Benztriazole, Benzophenone, Aryl-s-triazine, $\alpha$-Cyanacrylate oder Oxalanilide.

13. Anstrichmittel gemäss Anspruch 12, enthaltend als UV-Absorber ein Benztriazol-Lichtschutzmittel von relativ hohem Molekulargewicht und niedriger Flüchtigkeit.

14. Anstrichmittel gemäss Anspruch 12, worin die Summe von a) und b) 0,2 bis 20 Gew.-%, bezogen auf das feste Bindemittel, beträgt.

15. Verwendung eines Anstrichmittels gemäss Anspruch 1 zum Lackieren von Fahrzeugkarosserien.

Europäisches Patentamt

# EUROPÄISCHER RECHERCHENBERICHT

Nummer der Anmeldung

EP 88 81 0891

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 975 357 (MURAYAMA et al.) * Beispiel 6; Spalte 11, Zeilen 65-68 * --- | 1 | C 08 K 5/34<br>C 09 D 7/12 |
| A | EP-A-0 082 817 (CIBA-GEIGY AG) * Anspruch 1; Seite 24, Tabel 3, Nr. 39 * --- | 1,2 | |
| A | US-A-4 162 246 (SOMA et al.) * Anspruch 1; Spalte 4, Zeile 15 * --- | 1,2 | |
| A,D | EP-A-0 006 213 (CIBA-GEIGY AG) * Anspruch 1; Seite 4, Zeile 18 * ----- | 1 | |

| RECHERCHIERTE SACHGEBIETE (Int. Cl.4) |
|---|
| C 08 K |
| C 08 L |
| C 09 D |

Der vorliegende Recherchenbericht wurde für alle Patentansprüche erstellt

| Recherchenort | Abschlußdatum der Recherche | Prüfer |
|---|---|---|
| DEN HAAG | 10-04-1989 | SCHUELER D.H.H. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)